# EUROPEAN PATENT APPLICATION

(11) **EP 3 118 792 A1**
(43) Date of publication of application: **18.01.2017**
(21) Application number: 15190202.0
(22) Date of filing: 16.10.2015
(51) Int. Cl.: G06Q 20/06, G06Q 20/38, G06Q 20/10

(54) **CURRENCY TRANSFER SYSTEM**

(30) Priority: 17.07.2015 US 201514802243
(71) Applicant: Shyu, Tiemsansuk, Waterdown L0R 2H1 (CA)
(72) Inventor: Shyu, Tiemsansuk, Waterdown L0R 2H1 (CA)
(74) Representative: Noréns Patentbyrå AB

(57) **Abstract**

A system for wireless currency conversion and transfer includes a client interface constructed and arranged to access a client financial account; a second party interface device constructed and arranged to interact with said client interface device, whereby said client interface device selectively accesses currency based on a user-selectable currency type and said first client interface device wirelessly transfers said currency to said second party interface device directly.

## Description

### BACKGROUND OF THE INVENTION

Often, mobile transfer of money requires a user and receiver each to have access to a third party application. Once such application is a user and receiver each having access to sites such as PayPal® in order to facilitate that transfer. The present invention eliminates the third party and provides direct transfer of funds in selectable world currency from one device to another.

### SUMMARY OF THE INVENTION

In one embodiment, the present invention is a system for wireless currency conversion and transfer, said system comprising: a client interface constructed and arranged to access a client financial account; a second party interface device constructed and arranged to interact with said client interface device, whereby said client interface device selectively accesses currency based on a user-selectable currency type and said first client interface device wirelessly transfers said currency to said second party interface device directly.

The client, as used herein, refers to the entity sending the money. The second party, as used herein, is any person other than the client, receiving money.

In one embodiment, the client interface is any one of a cell phone, smart phone, tablet computer, portable computer, desktop computer, microcomputer device configured with communications means, or combinations thereof.

In one embodiment, the second party interface is any one of a cell phone, smart phone, tablet computer, portable computer, desktop computer, microcomputer device configured with communications means, or combinations thereof.

In one embodiment, the selective access currency based on a user-selectable currency type is operatively associated with real time currency exchange information from a selectable list of world-wide currency exchanges.

In one embodiment, the selective access currency based on a user-selectable currency type is operatively associated with real time currency exchange information from a selectable list of world-wide currency exchanges and includes a capture means for locking a specific exchange rate once said specific exchange rate is available for exchange.

In one embodiment, the client interface includes identification means for confirming communication with said second party interface.

### BRIEF DESCRIPTION OF THE SEVERAL VIEWS OF THE DRAWINGS

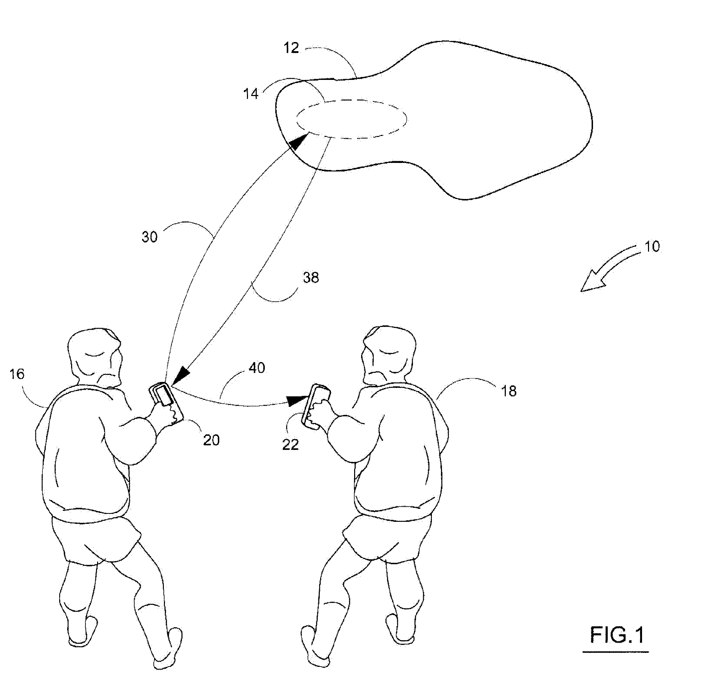

Fig. 1 is a system view demonstrating various components of the system according to one embodiment of the present invention.
Fig. 2 is a flow chart demonstrating the various component parts and steps relating to using the system and method of one embodiment of the present invention.

### DETAILED DESCRIPTION OF THE PREFERRED EMBODIMENTS

The present invention related to currency exchange system 10, whereby a first client 16 and a second client 18 access system 10 utilizing a first computerized electronic interaction device 20 and a second computerized electronic interaction device 22. Each of first computerized electronic interaction device 20 and second computerized electronic interaction device 22 are any one of: a cell phone; a smart phone; a tablet computer; a laptop computer; or combinations thereof. Each interfaced device 20 and 22 are constructed and arranged to interact with a financial institution electronic means 12, such as internet communications and internet portals, whereby a client account 14 is accessed by client 16 using interfaced device 20. Client account 14 utilizing electronic interactions from financial institution 12 transfers currency 38 to client device 20, and client device 20 directly transmits secure electronic financial transmission 40 to second party interface device 22.

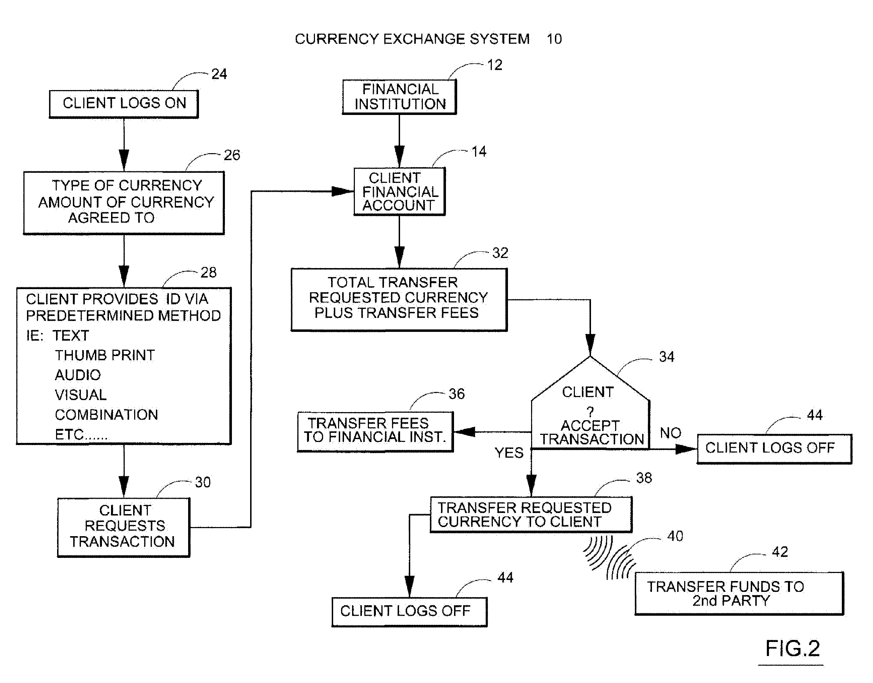

As generally understood, the system 10 of the present invention includes the steps set forth in Fig. 2. Client 16 initiates a logon 24 utilizing interface device 20. Logon securely accesses client financial account 14 administered by financial institution computer 12. Client 16 selects a particular type of currency in which the transaction is to be processed. This is not merely accessing a financial account and making a withdrawal. By selecting currency, a client can take advantages of instantaneous fluctuations in the currency market and request a withdrawal in a particular currency at a finite moment in time. Client 16 is identified via one or more identification methods, said methods include, but are not limited to, replying to a text message, providing a thumb print, providing an audio command, or a visual identifier, whereby any one of the client's audio profile and/or visual identifiers are used to validate the transaction. The system can use any one or combination of client identifiers.

Client 16 then requests the transaction. The financial institution 12 accesses the client account 14. The system calculates the total transfer amount based on current currency rates. The system is constructed and arranged to interface with at least one currency exchange and perform a currency conversion prior to transfer of currency in the desired amount. Once the transfer amount is established, client 16 is provided an opportunity to validate the transaction 34 and to either accept or deny the transaction. If the transaction is denied, system 10 logs off client 16 as demonstrated on the flow chart item 44. If client 16 accepts the transaction, transfer fees occur 36 and the transferred amount is delivered to interface device 20 utilized by client 16.

Client 16 then directly transfers funds to a second party 18 utilizing a wireless transfer 40 that goes directly from client interface device 20 to second party interface device 22. Once client 16 has completed the transaction, as demonstrated in flow chart Fig. 2, client 16 initiates logoff 44 and exits the system.

As generally understood each of client interface 20 and second party interface 22 initially require verification that transmission has been established utilizing system 10 of the present invention.

While the invention has been described in its preferred form or embodiment with some degree of particularity, it is understood that this description has been given only by way of example and that numerous changes in the details of construction, fabrication and use, including the combination and arrangement of parts, may be made without departing from the spirit and scope of the invention.

## Claims

1. A system for wireless currency conversion and transfer, said system comprising: a client interface constructed and arranged to access a client financial account; a second party interface device constructed and arranged to interact with said client interface device, whereby said client interface device selectively accesses currency based on a user-selectable currency type and said first client interface device wirelessly transfers said currency to said second party interface device directly.

2. The system of claim 1 wherein said client interface is any one of a cell phone, smart phone, tablet computer, portable computer, desktop computer, microcomputer device configured with communications means, or combinations thereof.

3. The system of claim 1 wherein said second party interface is any one of a cell phone, smart phone, tablet computer, portable computer, desktop computer, microcomputer device configured with communications means, or combinations thereof.

4. The system of claim 1 wherein said selective access currency based on a user-selectable currency type is operatively associated with real time currency exchange information from a selectable list of world-wide currency exchanges.

5. The system of claim 1 wherein said selective access currency based on a user-selectable currency type is operatively associated with real time currency exchange information from a selectable list of world-wide currency exchanges and includes a capture means for locking a specific exchange rate once said specific exchange rate is available for exchange.

6. The system of claim 1 wherein said client interface includes identification means for confirming communication with said second party interface.
